Europäisches Patentamt

European Patent Office

Office européen des brevets

(11) Veröffentlichungsnummer: **0 171 745**
**B1**

(12) **EUROPÄISCHE PATENTSCHRIFT**

(45) Veröffentlichungstag der Patentschrift:
**24.02.88**

(21) Anmeldenummer: **85109924.2**

(22) Anmeldetag: **07.08.85**

(51) Int. Cl.⁴: **F 16 B 13/06,** F 16 B 13/14

(54) **Aus einem Kunststoffspreizdübel und einer Befestigungsschraube bestehender Befestigungssatz.**

(30) Priorität: **10.08.84 DE 3429585**

(43) Veröffentlichungstag der Anmeldung:
**19.02.86 Patentblatt 86/8**

(45) Bekanntmachung des Hinweises auf die Patenterteilung:
**24.02.88 Patentblatt 88/8**

(84) Benannte Vertragsstaaten:
**AT BE CH DE FR GB IT LI LU NL SE**

(56) Entgegenhaltungen:
**EP-A-0 054 681**
**EP-A-0 113 893**
**AT-B-309 761**
**AT-B-357 320**
**DE-A-2 261 655**
**DE-A-2 701 510**
**DE-A-2 733 612**
**DE-A-2 753 547**
**GB-A-2 077 877**

(73) Patentinhaber: **Knoche, Alfons, Overbergstrasse 7,**
**D-5758 Fröndenberg (DE)**

(72) Erfinder: **Knoche, Alfons, Overbergstrasse 7,**
**D-5758 Fröndenberg (DE)**

(74) Vertreter: **Graf, Walter, Dipl.- Ing., Sckellstrasse 1,**
**D-8000 München 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Befestigungssatz laut Oberbegriff des Patentanspruchs 1.

Befestigungssätze dieser Art, wie sie insbesondere zur Durchsteckmontage bzw. für die Verankerung in Decken benutzt werden, sind bekannt. Durch das Eintreiben des Befestigungselements (Schraube oder Schraubnagel) wird das Kunststoffmaterial im Bohrloch verdrängt und hierdurch ein Reibschluss/Formschluss an der Bohrlochwand erzeugt. Neuere Untersuchungen haben gezeigt, dass der durch den Montagevorgang erzeugte Anpressdruck im Laufe der Zeit abgebaut wird ("Kunststoffe im Bau", 19. Jahrgang, 1984, Heft 1, S. 15 - 18).

Es wurde zur Lösung dieses Problems auch schon versucht, im Zusammenhang mit einer ein Rundgewinde aufweisenden Befestigungsschraube die Längsbohrung des Dübels bis in die Spreizzone zu verlängern und dort ein der Steigung und dem Profil des Rundgewindes der Schraube angepasstes Innengewinde vorzusehen, dessen Aussen- und Kernmass geringer als die entsprechenden Masse des Rundgewindes gewählt wurden (Europäische Patentanmeldung 0 054 681). Durch diese bekannte Lösung soll sowohl eine Spreizung als auch ein vorgeformter Formschluss zwischen Schraube und Dübel erzielt werden und es soll auch in den Gewindemulden, also über den Kern der Schraube, ein Spreizdruck erzeugt werden. Ein solches zusätzliches Innengewinde im Bereich der Spreizzone ist im Spritzgussverfahren jedoch nur schwer herstellbar, der für die Herstellung des Innengewindes erforderliche Formkern muss ja nach dem Spritzgussvorgang aus dem Dübel wieder herausgezogen werden. Ausserdem ist diese bekannte Lösung nur für Schrauben mit Rundgewinde geeignet und nicht ffür übliche Holzschrauben oder Schlagschrauben mit Sägezahngewinde und dergleichen.

Es ist daher Aufgabe der Erfindung, einen Befestigungssatz der eingangs erwähnten Art zu schaffen, bei dem das eingangs erwähnte Problem mit einem einfach und billig herstellbaren Kunststoffspreizdübel gelöst wird.

Diese Aufgabe wird ausgehend von einem Befestigungssatz laut Oberbegriff des Hauptanspruches durch dessen kennzeichnende Merkmale gelöst. Vorteilhafte Weiterbildungen insbesondere auch bezüglich einer besonders einfachen Befestigungsschraube für die Durchsteckmontage ergeben sich aus den Unteransprüchen.

Bei dem erfindungsgemässen Befestigungssatz wird der flache seitlich offene Schlitz im Kunststoffdübel beibehalten und nur über kurze quer zur Dübelachse verlaufende Rippenabschnitte, die durch Nuten aus den ebenen gegenüberliegenden Innenflächen der beiden Spreizhälften der Dübelspreizzone entstehen, dafür gesorgt, dass nach dem Eintreiben der Befestigungsschrauben ein vorgeformter Formschluss zwischen den Gewindegängen der Schraube und den beiden Spreizhälften des Dübels entsteht. Beim Einschrauben der Befestigungsschraube ist also keine so grosse Verformungsarbeit nötig wie beim Einschrauben in den Schlitz eines üblichen Dübels und dadurch muss das Gewinde der Schraube weniger Kunststoffmaterial verdrängen. Trotzdem wird der gleiche auf die Bohrwandung wirkende Spreizdruck erzeugt, da auch die Gewindemulden der Schraube zur Erzeugung des Spreizdruckes beitragen und nicht nur die Spitzen der Gewindegänge. Durch die zusätzlichen Rippen, die im Idealfall den gesamten Raum zwischen den Gewindegängen ausfüllen, wird also eine sehr gleichmässige Spreizdruckverteilung des Dübelmaterials erreicht und dadurch ein hoher Haltewert, und zwar sowohl in weichen als auch in harten Baustoffen. Da die Verformungsarbeit bei dem erfindungsgemässen Dübel wesentlich günstiger ist, ist auch der bekannte Abbau des Anpressdruckes nach der Montage wesentlich geringer oder wird sogar ganz verhindert. Ein erfindungsgemässer Befestigungssatz ermöglicht also sehr hohe Haltewerte und ist daher insbesondere für die Durchsteckmontage zur Befestigung in Decken geeignet, er kann aber genauso gut bei üblichen Wanddübeln eingesetzt werden und zwar sowohl im Zusammenhang mit einfachen Befestigungsschrauben oder aber auch zusammen mit sogenannten Schraubnägeln, die meist ein Sägezahngewinde aufweisen und mit dem Hammer in den Dübel eingetrieben werden.

Ein erfindungsgemässer Kunststoffspreizdübel kann sehr einfach und billig im Spritzgussverfahren hergestellt werden, da die seitlich offenen Quernuten im Bereich des Schlitzes sehr einfach durch Formteile hergestellt werden können, die beim Öffnen der Spritzgussform seitlich herausgezogen werden können, da diese Nuten ja parallel zueinander und jeweils senkrecht zur Dübelachse ausgerichtet sind. Damit können sehr tiefe Nuten mit scharfen Kanten hergestellt werden, was mit einem Kern zur Herstellung eines Innengewindes niemals erreichbar wäre.

Wird die erfindungsgemässe Massnahme bei einem Befestigungssatz für die Durchsteckmontage benutzt, ist es vorteilhaft, im Sinne des Unteranspruchs 7 auch noch im oberen Bereich des Dübelhalses ein zusätzliches Gewinde vorzusehen, das einerseits als Einschlagsicherung wirkt und bei Verwendung einer Schraube als Befestigungselement als Führungsgewinde wirkt. Vorzugsweise wird im Zusammenhang mit einem solchen Spreizdübel für die Durchsteckmontage ein spezielles Befestigungselement nach den weiteren Unteransprüchen benutzt.

Die Erfindung wird im folgenden anhand schematischer Zeichnungen an Ausführungsbeispielen näher erläutert.

Figuren 1, 2 und 3 zeigen die Seitenansicht (teilweise im Schnitt), die Innenansicht in der Abwicklung bzw. den Schnitt III-III eines ersten Ausführungsbeispiels eines Kunststoffspreizdübels für einen Befestigungssatz gemäss der Erfindung

Figuren 4, 5 und 6 zeigen in entsprechenden Ansichten ein zweites Ausführungsbeispiel eines solchen Dübels

Figuren 7 bis 10 zeigen die entsprechend nummerierten Querschnitte der Figuren 1 bzw. 6

Fig. 11 zeigt Details des oberen Teiles eines Dübels mit teilweise eingeschraubter Befestigungsschraube

Figuren 12 bis 14 zeigen weitere mögliche Schraubenformen für die Verwendung im Zusammenhang mit einem erfindungsgemässen Spreizdübel.

Fig. 15 zeigt die Seitenansicht einer weiteren Dübelform Fig. 16 zeigt den zugehörigen Längsschnitt mit der Draufsicht auf die Querrippen der einen Spreizhälfte.

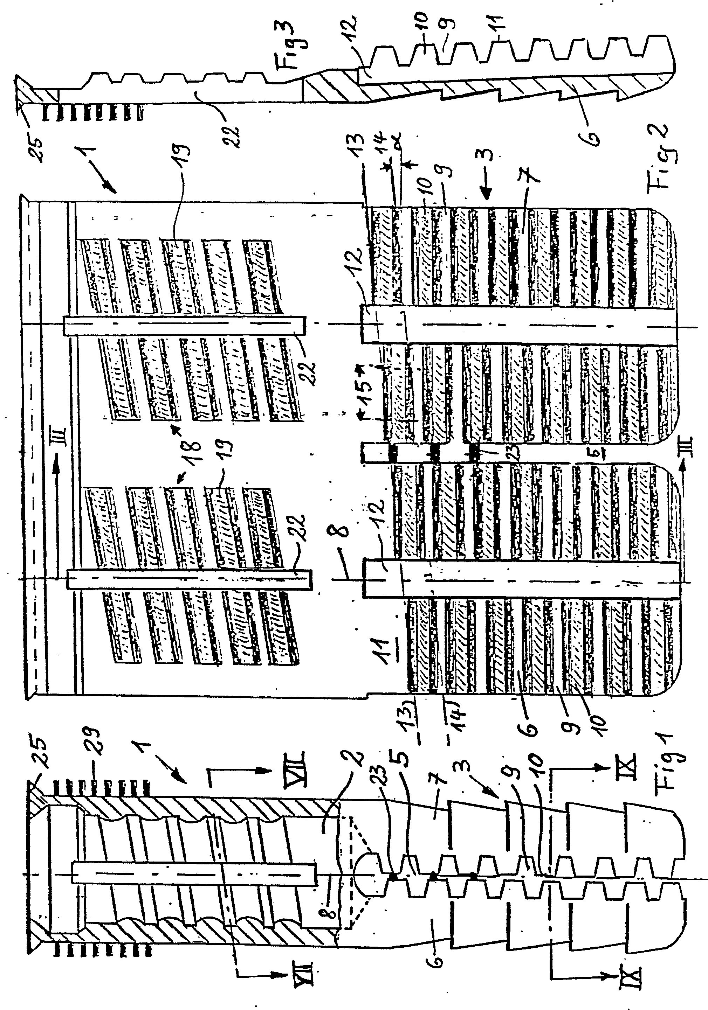

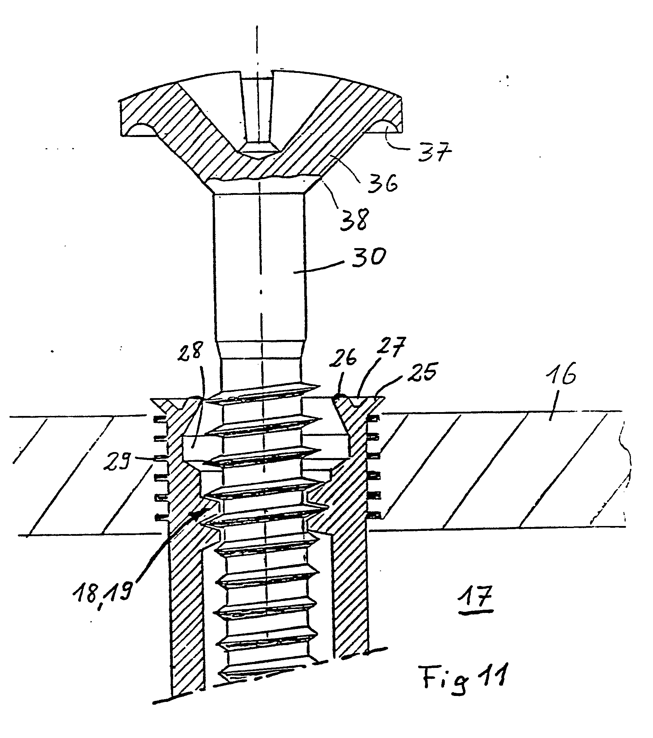

Der Kunststoffspreizdübel 1 des Ausführungsbeispiels nach den Figuren 1 bis 3 besitzt im oberen Bereich eine die Befestigungsschraube 30 aufnehmende Längsbohrung 2, die im unteren Bereich der eigentlichen Spreizzone 3 in einen durchgehenden Schlitz 5 übergeht, der zu beiden Seiten offen ist. Die durch diesen Schlitz gebildeten beiden Spreizhälften 6 und 7 sind aussen mit einem entsprechenden Spreizprofil, beispielsweise mit Zähnen oder Rippen, versehen. Auf den beiden sich gegenüberliegenden ebenen Innenseiten 11 dieser Spreizhälften 6 und 7, die den schmalen durchgehenden Schlitz 5 begrenzen, sind mehrere parallel zueinander und jeweils quer und senkrecht zur Mittelachse 8 des Dübels verlaufende Quernuten 9 ausgebildet. Dadurch werden mehrere kurze Querrippen 10 auf den sich gegenüberliegenden Flächen 11 der beiden Spreizhälften 6 und 7 gebildet, die im Sinne der Draufsicht auf die Abwicklung nach Fig. 2 in Längsrichtung des Dübels treppenartig gegeneinander versetzt sind. Die Länge dieser Rippen auf jeder Spreizhälfte wird vorzugsweise noch durch eine Längsnut 12 unterteilt, die vorzugsweise eine grössere Tiefe als die Quernuten 9 besitzt und die Quernuten 9 kreuzt. Die treppenartige Versetzung dieser kurzen Querrippen 10 ist entsprechend der Steigung α des Gewindes der Befestigungsschraube 30 gewählt (Steigung α nach Fig. 13), und zwar laut Fig. 2 vorzugsweise so, dass die kurzen Querrippen 10 jeweils zwischen den beiden in Fig. 2 angedeuteten Gewindegängen 13 und 14 des Schraubengewindes liegen. Es genügt, wenn der Hauptteil 15 der Rippen 10 jeweils innerhalb der durch die Gewindegänge 13 und 14 bestimmten Grenzen liegt, wie dies Fig. 2 zeigt, ein Teil der Rippen im Bereich der Rippenenden kann etwas über diese Gewindeganggrenzen 13 und 14 überstehen, diese überstehenden Ecken werden beim Einschrauben der Schraube durch die Gewindegänge leicht verformt und liegen dann ebenfalls innerhalb des Profils der Schraubgänge.

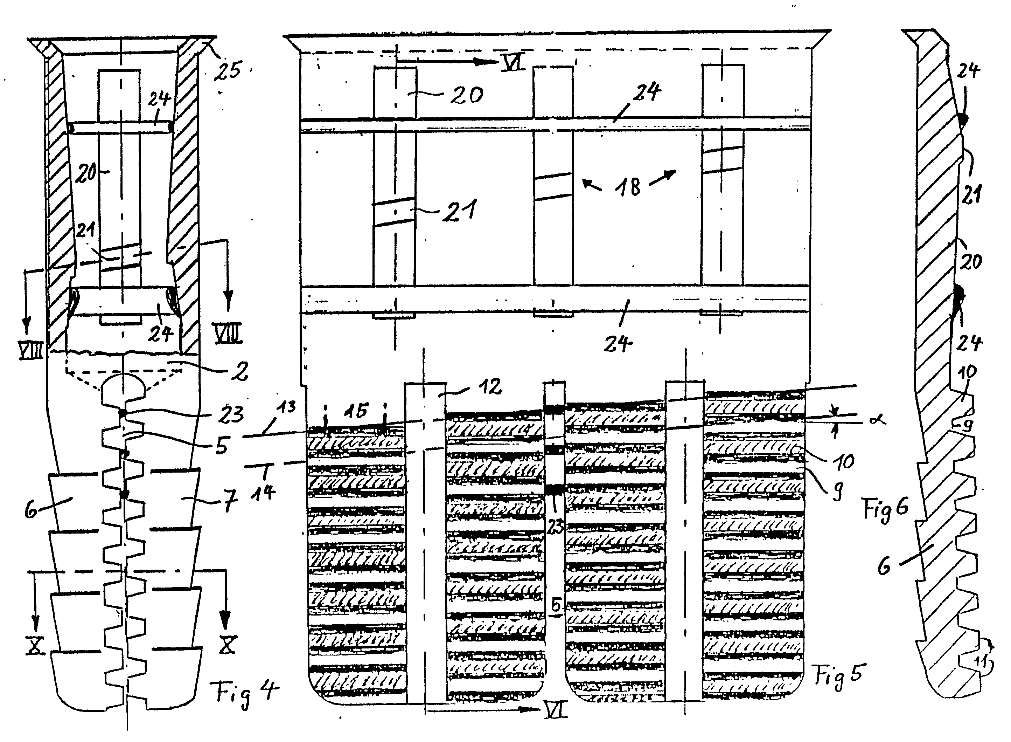

Ein erfindungsgemässer Dübel ist insbesondere für die Durchsteckmontage geeignet, wie dies in Fig. 11 im Prinzip zur Befestigung eines Bauteiles 16 an einer Wand 17 für den oberen Teil eines solchen Dübels dargestellt ist. In diesem Fall hat es sich als zweckmässig erwiesen, im oberen Bereich des Dübels, der im montierten Zustand im Bereich des zu befestigenden Bauteils 16 liegt, noch ein zusätzliches Innengewinde 18 vorzusehen, und zwar kann dieses zusätzliche Innengewinde beispielsweise im Sinne der Figuren 1 bis 3 durch zusätzliche von der Innenseite der Längsbohrung 2 des Dübels abstehende Rippen 19 gebildet sein, die zur Vereinfachung der Herstellung des Dübels im Spritzgussverfahren relativ flach ausgebildet sind, wie dies der Schnitt nach Fig. 3 zeigt. Eine andere Möglichkeit der Ausbildung dieses zusätzlichen oberen Innengewindes 18 zeigen die Figuren 4 bis 6, hier sind im oberen Bereich über den Umfang der Längsbohrung auf der Innenseite des Dübels drei Längsrippen 20 verteilt ausgebildet, auf denen in Längsrichtung gegeneinander versetzte Nocken 21 aufgebracht sind, die das eigentliche Gewinde bilden.

Zur Vereinfachung der Herstellung eines solchen Dübels im Spritzgussverfahren sind auch in diesem oberen Bereich des Dübels vorzugsweise noch entsprechende Längsschlitze 22 vorgesehen, die auch das Ausdrehen einer Schraube erleichtern, vor allem wenn diese aus Kunststoff bestehen, da dadurch die Dübelwand auch in diesem oberen Bereich etwas elastisch nachgiebig wird.

Das zusätzliche obere Gewinde 18 hat zwei Funktionen. Es wirkt einerseits als Einschlagsicherung für die Befestigungsschraube 30, und zwar kommt bei Verwendung einer Schraube nach Fig. 13 nach dem Einstecken der Schraube in den Dübel beispielsweise nach Fig. 1 das obere Gewinde 31 an diesem zusätzlichen Innengewinde 18 zur Anlage. Erst durch Eindrehen des oberen Gewindeabschnitts 31 in das Gewinde 18 kann diese Einschlagsicherung überwunden werden. Gleichzeitig wirkt aber dieses obere Innengewinde 18 auch als Vorschub und Führungsgewinde für die Befestigungsschraube, wenn der obere Gewindeabschnitt 31 in das Gewinde 18 eingeschraubt wird, wird auch das untere Gewinde 32 in den Dübel eingetrieben. Die beiden Gewinde 31 und 32 besitzen vorzugsweise gleiche Steigung. Durch dieses obere Innengewinde 18 wird also der Einschraubvorgang erleichtert.

Der Schlitz 5 des Dübels ist im oberen Bereich durch schmale Stege 23 überbrückt, die in einem Stück mit dem Dübel gegossen sind und als Einschlagsicherung dienen, d.h. erst nach Aufreissen dieser Stege 23 kann die Spreizzone aufgespreizt werden. Als zusätzliche weitere Einschlagsicherung kann neben dem Innengewinde 18 auch noch ein zusätzlicher umlaufender Ring 24 vorgesehen sein, wie dies Figuren 4 bis 6 zeigen. Dieser Ring 24 liegt wiederum vorzugsweise innerhalb der Teilung des Gewindes der verwendeten Schraube und wird beim Einschrauben durch das obere Gewinde 31 durchschnitten und kommt dann innerhalb der Gewindegänge des oberen Gewindes 31 zu liegen. Der Aussendurchmesser des unteren Gewindes 32 der Schraube besitzt einen kleineren Durchmesser als der mit dem oberen Innengewinde 18 zusammenwirkende obere Gewindeabschnitt 31 der Schraube, so dass der untere Gewindeabschnitt 32 ungehindert durch den oberen Innengewindeabschnitt 18 in den Dübel eingesteckt werden kann.

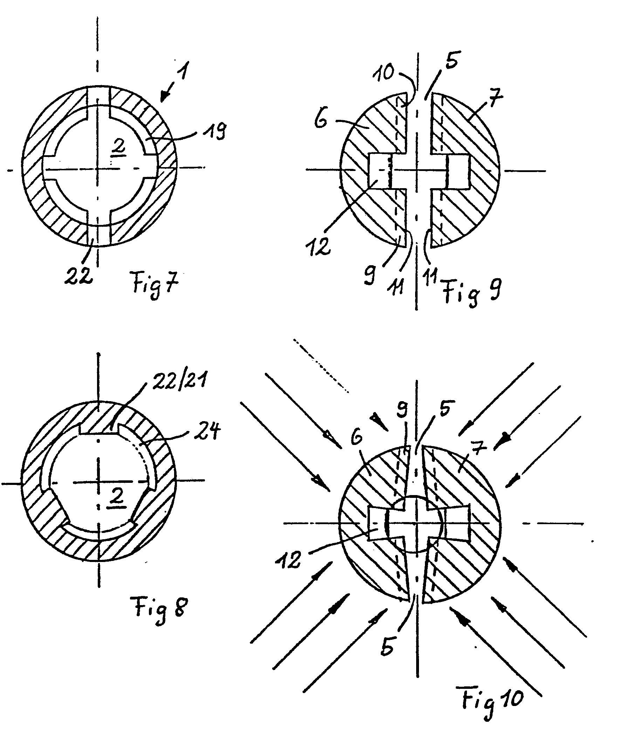

Gemäss dem Schnittbild nach Fig. 9 besitzt der durchgehende Dübelschlitz 5 vorzugsweise einen rechteckigen Querschnitt, d.h. die sich gegenüberliegenden Innenflächen 11 der beiden Spreizhälften sind plan. Wird ein solcher Dübel in das Bohrloch eingesetzt, so können geringfügige seitliche Kräfte im Sinne der Fig. 10 auf die Aussenseite des Dübels einwirken. Da über die durchgehende Längsnut 12 die Dübelwand in diesem Bereich relativ geschwächt ist, wirkt dieser Bereich wie ein Scharnier und die beiden Hälften jeder Spreizhälfte 6 bzw. 7 werden im Sinne der Fig. 10 etwas nach innen eingebogen, so dass der Schlitz 5 in seinem Querschnitt schliesslich die in Fig. 10 dargestellte Trapezform nach beiden Seiten hin erhält. Auf diese Weise wird der formschlüssige Kontakt zwischen den Querrippen 10 bzw. den Quernuten 9 und den Gewindegängen 32 der Schraube erhöht. In gewissen Fällen kann es von Vorteil sein, diese in Fig. 10 dargestellte hinterschnittene Trapezform des Schlitzquerschnittes bereits von Anfang an am Dübel vorzusehen, die Herstellung eines solchen Schlitzes von hinterschnittener Trapezform ist auch im Spritzgussverfahren nicht weiter schwierig, da die entsprechenden Formteile leicht seitlich aus dem elastischen Dübel herausgezogen werden können, genauso einfach wie die Formteile zur Herstellung der seitlich offenen Quernuten 9, die bei der Herstellung des Dübels im Spritzgussverfahren ebenfalls seitlich herausgezogen werden und die es ermöglichen, dass die dazwischen entstehenden Rippen 10 ein sehr kantiges Profil erhalten. Damit ist es erstmals auch möglich, diese Rippen 10 mit möglichst grosser Höhe herzustellen, wie dies mit einem reinen Innengewinde in diesem Bereich nicht möglich wäre.

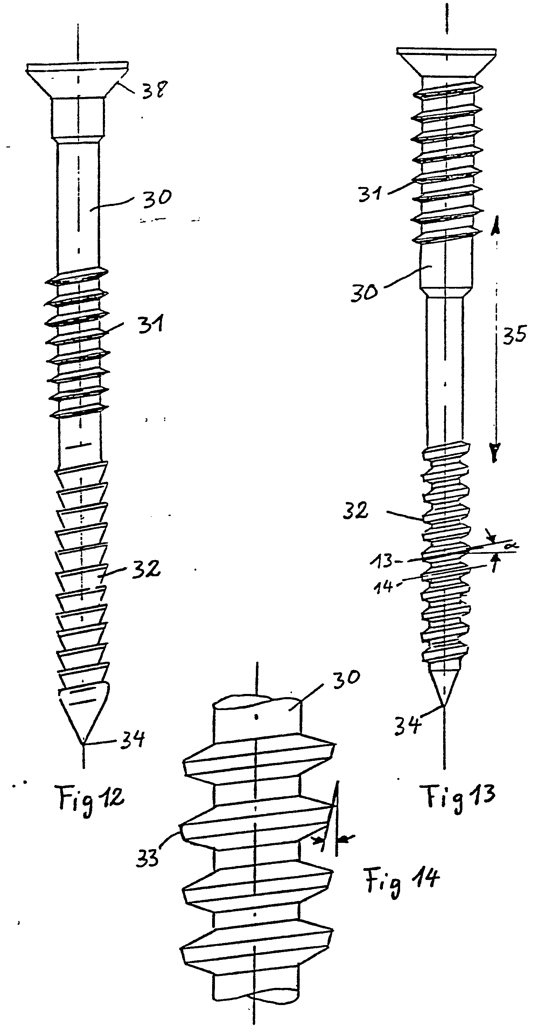

Als Befestigungsschrauben sind sowohl übliche Holzschrauben als auch sogenannte Schraubnägel geeignet, ein Beispiel für einen geeigneten Schraubnagel zeigt Fig. 12. Das untere Gewinde 32 ist in diesem Fall als Sägezahngewinde ausgebildet. Nach dem Ausführungsbeispiel gemäss Fig. 13 ist das untere Gewinde 32 als Trapezgewinde ausgebildet. Es eignet sich sowohl zum Einschrauben als auch zum Einschlagen (Schraubnagel), vor allem, wenn im Sinne der Fig. 14 die äusseren Ringflächen 33 zur Spitze 34 hin konisch ausgebildet sind, da beim Einschlagen eines mit einem solchen Gewinde versehenen Schraubnagels mit dem Hammer die äusseren Trapezflächen kein Material von den Rippen 10 des Kunststoffdübels abschaben. Eine solche Schraube nach Fig. 13 ist also sowohl schraubbar als auch schlagbar. Es können auch Schrauben aus Kunststoff verwendet werden, da über die zusätzlichen Spreizschlitze 22 eine solche Schraube leicht wieder aus dem Dübel herausgeschraubt werden kann. Der Abstand 35 zwischen dem oberen Gewindeabschnitt 31 und dem unteren Gewindeabschnitt 32 der Schraube richtet sich nach dem Anwendungsfall und dem hierzu verwendeten Dübel. Die Ränder des Trapezgewindes können auch noch abgerundet sein.

Fig. 11 zeigt Details des oberen Randes des Dübels nach den vorhergehenden Figuren, und zwar im Zusammenhang mit einer speziellen Form des Kopfes einer im Zusammenhang damit verwendeten Schraube. Der Rand 25 des Dübels ist nicht wie bei üblichen Dübeln dieser Art für die Durchsteckmontage breit ausgebildet sondern steht nur relativ wenig über die Aussenseite des Dübels ab. Dafür ist auf der Innenseite des Randes ein zusätzlicher Verstärkungsringflansch 26 ausgebildet, der über eine Ringnut 27 vom nach aussen abstehenden Rand 25 getrennt ist. Damit ist der innere Ringflansch 26 federnd und behindert nicht das Einstecken der Schraube. Der Kopf 36 der Schraube ist im Durchmesser grösser gewählt als der Aussendurchmesser des Dübelrandes 25, so dass er im eingesetzten Zustand diesen Rand 25 nach aussen abdeckt. Auf der Unterseite des Kopfes 36 ist eine umlaufende Nut 37 ausgebildet, die den Rand 25 im eingesetzten Zustand aufnimmt. Dadurch bleibt dieser Rand 25 vom Kopf unbeschädigt. Bei einer Senkkopfschraube ist der untere Teil entsprechend als Trompetenkopf ausgebildet.

Unterhalb des Dübelrandes 25 ist auf der Innenseite der Dübelbohrung eine umlaufende Ringnut 28 ausgebildet, durch welche die Wandstärke des Dübels in diesem Bereich geschwächt wird. Dieser Bereich wirkt also nach Art einer Knautschzone und beim Aufdrücken des Schraubenkopfes auf den Dübelrand 25 wird dieser etwas axial eingedrückt, d.h. der Dübel wird in Längsrichtung etwas gestaucht. Zusätzlich können am Aussenumfang des Dübels noch radial abstehende Lamellen 29 vorgesehen sein, die eine bessere Verbindung mit dem zu befestigenden Bauteil 16 gewährleisten. Beim Einschlagen des Befestigungssatzes mit dem Hammer oder beim Einschrauben kann über diese Lamellen 29 der Dübel 1 nicht in die Bohrung einrutschen oder sich auf den Grund der Bohrung im Mauerwerk absetzen, denn die Lamellen verformen sich beim Einsetzen und krallen sich wie Rasten in der Bohrung des Bauteiles 16 fest und verhindern ein Einrutschen.

Unterhalb des Schraubenkopfes 36 ist vorzugsweise ein Kegelstumpf 38 ausgebildet, der dem Durchmessermass des Dübels entspricht und als Zentrierung wirkt. Wenn beispielsweise dünne Bleche montiert werden besteht die Gefahr, dass der Dübel mit seinem Rand 25 durch die Bohrung des Bleches durchrutscht. In diesem Fall übernimmt der Kegelstumpf 38 die Zentrierung des Bleches in Bezug auf den Dübel.

Zur Befestigung eines Bauteiles 16 an einer Wand 17 wird zunächst durch beide Bauteile ein Loch gebohrt und dann der Durchsteck-Montagedübel 1 in das Loch eingesetzt, wobei die Schraube bereits vorher eingesetzt sein kann. Zur Herstellung von Sichtverbindungen wird der Kopf der Schraube 36 grösser gewählt als der Durchmesser des Dübelrandes 25. Dann wird mit dem Hammer oder dem Schraubenzieher die Schraube in den Dübel eingetrieben. Dabei setzt sich der Dübelrand 25 am zu befestigenden Bauteil 16 auf und sein weiteres Eindringen wird durch Lamellen 29 gebremst. Der obere Gewindeabschnitt 31 wirkt zunächst als Einschlagsicherung und kommt an dem oberen Innengewinde 18 bzw. den zusätzlichen Ringen 24 zur Anlage. Beim weiteren Eintreiben der Schraube schert das obere Gewinde 31 der Schraube das Innengewinde 18 im Dübel zumindest teilweise ab und die Schraube kommt schliesslich in die Spreizposition, wobei dann der untere Gewindeabschnitt 32 die beiden Spreizhälften 6 und 7 der Spreizzone aufspreizt. Dabei wird die Schraube zwischen den Rippen 10 geführt und sowohl die Schraubengänge als auch der Kern der Schraube wirken auf die Rippen 10 ohne dass hierzu eine Verformungsarbeit im Kunststoffmaterial auftritt. Dadurch wird ein starker Spreizdruck erzeugt. Zum Schluss wirkt der Schraubenkopf auf den Rand 25, wenn dieser etwas vorsteht, kann über die Knautschzone 28 der Dübelrand etwas gestaucht werden, bis er bündig mit dem zu befestigenden Bauteil 16 ist.

Die beiden Längsnuten 12, welche die Quernuten 9 schneiden, sind vorzugsweise in der Mitte der beiden Spreizhälften 6 und 7 angeordnet, wie dies die Abwicklung in der Ebene nach den Figuren 2 und 5 zeigen, so dass im Sinne der Fig. 10 diese beiden Nuten 12 gegenüberliegen. Damit wird durch diese Nuten 12 zusammen mit dem seitlich offenen Schlitz 5 eine Art Mittelführung für die Schraube 30 zwischen den Querrippen 10 geschaffen, anfänglich kommen daher beim Einschrauben der Schraube zunächst nur die Ecken der Rippen 10 in Eingriff mit den Gewindegängen, bis die Einschlagsicherung 23 aufgeht und die beiden Spreizhälften sich etwas aufspreizen. Dann kommen immer mehr Teile der Querrippen 10 zwischen die Gewindegänge der Schraube, bis das Rippenmaterial schliesslich den ganzen Raum zwischen den Gewindegängen ausfüllt und in optimaler Weise die Spreizkräfte von der Schraube auf das Dübelmaterial überträgt.

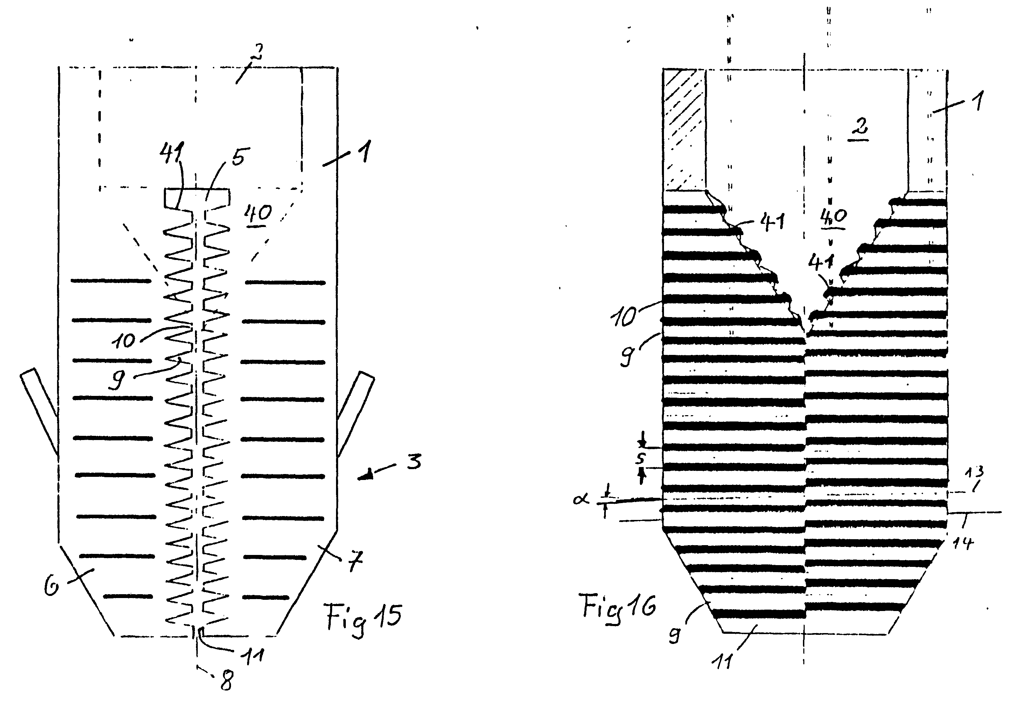

Fig. 15 zeigt einen weiteren Kunststoff-Spreizdübel 1, der anschliessend an seine zylindrische Längsbohrung 2 in einen Schlitz 5 übergeht, der zu beiden Seiten offen ist. Auch hier sind wieder auf den beiden sich gegenüberliegenden flachen ebenen Innenseiten 11 der Spreizhälften 6 und 7 zu beiden Seiten des Schlitzes 5 mehrere parallel zueinander und quer zur Mittelachse 8 verlaufende Quernuten 9 mit dazwischen liegenden Querrippen 10 ausgebildet, die im Sinne der Schnitt-Draufsicht nach Fig. 16 in Längsrichtung des Dübels treppenartig gegeneinander versetzt sind. Die Versetzung ist wieder entsprechend dem Steigungswinkel α des Gewindes der zugehörigen nicht dargestellten Befestigungsschraube gewählt, auch die Steigung s in Millimeter, d.h. der Abstand zwischen benachbarten Querrippen 10 bzw. Quernuten 9 ist entsprechend der Steigung der Befestigungsschraube gewählt. Bei dieser Ausführungsform eines Spreizdübels setzt sich die zylindrische Längsbohrung 2, deren Innendurchmesser etwa dem Aussendurchmesser der einzusetzenden Befestigungsschraube entspricht, in Richtung Dübelende in einem Konus 40 fort, der in einer Spitze endet. Der Schlitz 5 beginnt wie im Ausführungsbeispiel nach Fig. 1 bereits am Ende der zylinderischen Bohrung 2. Die Quernuten 9 bzw. Querrippen 10 setzen sich auch in diesem Bereich des Konus 40 auf den sich gegenüberliegenden Flächen 11 der beiden Spreizhälften 6 und 7, die durch den Schlitz 5 getrennt sind, fort. Ihre inneren Enden 41 enden nicht in der Konusinnenfläche sonderen stehen über diese radial etwa vor, bilden also zu beiden Seiten des Schlitzes 5 im Bereich des Konus 40 nach innen einige Millimeter vorspringende Noppen 41 mit der Steigung und dem Steigungswinkel der einzusetzenden Schraube. Eine von oben in die Längsbohrung 2 eingesetzte Schraube findet durch diese seitlich vorspringenden Noppen 41 im Konusbereich eine Anfangsführung, so dass die Schraube sicher zwischen die nach Art einer Mutter Gewindegänge bildenden Stege 10 eingeführt wird und dann auch in dem dem Konus 40 nachfolgenden Bereich zwischen den Querrippen 10 exakt geführt ist. Damit wird auch bei scharfkantigen spitzen Schrauben wie Spanplattenschrauben ein sicheres Einführen der Schraube in die Spreizzone und die dort vorgesehene Gewindeführung erreicht. Diese Noppen 41 dienen auch gleichzeitig als Einschlagsperre, d.h. die Schraube wird anfänglich daran gehindert, schon vor dem Einsetzen des Dübels in die Spreizzone einzudringen und so den Dübel vorzeitig aufzuspreizen. Beim erfindungsgemässen Spreizdübel bilden die Oberseiten der Querrippen 10 die gegenüberliegenden flachen Innenseiten 11 der beiden Spreizhälften 6 und 7, d.h. die Oberseiten der Querrippen 10 besitzen den durch die Schlitzbreite gegebenen Abstand voneinander und sie greifen nicht über die Mittellinie des Dübels ineinander ein sondern stehen sich im Abstand gegenüber. Damit wird in der Spreizzone auf einfache Weise ein Muttergewinde für die einzuschraubende Schraube geschaffen, das sehr einfach in Spritzguss herstellbar ist. Die Herstellung der vorspringenden Noppen 41 im Konusbereich kann genauso einfach im Spritzgussverfahren realisiert werden, dazu ist es lediglich nötig, auf der Oberseite des den Konus bildenden Spritzguss-Kerns im Bereich des Schlitzes entsprechende flache Ausnehmungen auszubilden, in die das Kunststoffmaterial zur Bildung der Noppen 41 einfliessen kann, ohne dass das anschliessende Herausziehen des Spritzkernes hierdurch behindert ist.

**Patentansprüche**

1. Aus einem Kunststoff-Spreizdübel und einer Befestigungsschraube bestehender Befestigungssatz, bei dem der Spreizdübel eine die Schraube aufnehmende Längsbohrung aufweist, die im Bereich seiner Spreizzone in einen seitlich offenen Schlitz übergeht, dadurch gekennzeichnet, dass auf den den Schlitz (5) bildenden gegenüberliegenden Innenflächen (11) der beiden Spreizhälften (6 und 7) der Spreizzone quer zur Dübelachse (8) und parallel zueinander verlaufende, kurze, seitlich offene Quernuten (9) ausgebildet sind, die entsprechend der Steigung (α) des Gewindes der Befestigungsschraube (30) treppenartig gegeneinander versetzt sind (Abwicklung nach Figuren 2 und 5).

2. Befestigungssatz nach Anspruch 1, dadurch gekennzeichnet, dass die Quernuten (9) ein solches Profil aufweisen, dass die dazwischen verbleibenden kurzen Querrippen (10) mit ihrem Hauptteil (15) jeweils den Raum zwischen den Gewindegängen (13, 14) der Befestigungsschraube bis zum Gewindegrund im wesentlichen ausfüllen.

3. Befestigungssatz nach Anspruch 1 oder 2, dadurch gekennzeichnet, dass auf den gegenüberliegenden Innenflächen (11) der Spreizhälften (6, 7) mindestens eine die Quernuten (9) kreuzende zusätzliche Längsnut (12) ausgebildet ist.

4. Befestigungssatz nach Anspruch 3, dadurch gekennzeichnet, dass die Tiefe dieser Längsnut (12) grösser ist als die der Quernuten (9).

5. Befestigungssatz nach einem der vorhergehenden Ansprüche, dadurch gekennzeichnet, dass der Schlitz (5) des Dübels im Querschnitt eine zu beiden Seiten hin hinterschnittene Trapezform beseitzt (Fig. 10).

6. Befestigungssatz nach einem der vorhergehenden Ansprüche, dadurch gekennzeichnet, dass der Schlitz (5) zwischen den Spreizhälften (6, 7) an seinen Rändern im oberen Bereich durch mindestens einen Sollbruchsteg (23) überbrückt ist.

7. Befestigungssatz nach einem oder mehreren der vorhergehenden Ansprüche ausgebildet für die Durchsteckmontage, dadurch gekennzeichnet, dass im Bereich des Dübelhalses in der Höhe des zu befestigenden Bauteiles (16) auf der Innenfläche der Dübelbohrung mindestens eine in Steigung und Profil dem Gewinde (31) der Befestigungsschraube angepasste Rippe (19, 21, 24) vorgesehen ist.

8. Befestigungssatz nach Anspruch 7, dadurch gekennzeichnet, dass die Rippe (19, 21, 10) eine geringere Höhe als die zwischen den Quernuten (9) verbleibenden Querrippen (10) im unteren Dübelbereich besitzen.

9. Befestigungssatz nach Anspruch 7 oder 8, dadurch gekennzeichnet, dass mehrere Rippen (19) parallel nebeneinander vorgesehen sind.

10. Befestigungssatz nach einem der Ansprüche 7 bis 9, dadurch gekennzeichnet, dass die Rippen (21) auf drei über die Innenseite der Dübelbohrung verteilten Längsrippen (20) ausgebildet sind (Fig. 4 bis 6).

11. Befestigungssatz nach einem der vorhergehenden Ansprüche 7 bis 10, dadurch gekennzeichnet, dass in der Dübelwand im Bereich der Höhe des zu befestigenden Bauteiles (16) und damit auch im Bereich der zusätzlichen Rippen (19, 21) mindestens zwei weitere Schlitze (22) ausgebildet sind.

12. Befestigungssatz nach einem der Ansprüche 7 bis 11, dadurch gekennzeichnet, dass auf der Innenseite der Dübelbohrung zusätzliche nach innen vorspringende Ringflansche (24) als Einschlagsicherung vorgesehen sind.

13. Befestigungssatz nach einem der vorhergehenden Ansprüche, dadurch gekennzeichnet, dass der seitlich überstehende obere Dübelrand (25) relativ schmal ausgebildet ist und ein nach innen in die Dübelbohrung vorspringender Verstärkungsflansch (26) vorgesehen ist.

14. Befestigungssatz nach Anspruch 13, dadurch gekennzeichnet, dass zwischen dem Dübelrand (25) und dem nach innen vorspringenden Verstärkungsflansch (26) eine umlaufende Nut (27) vorgesehen ist.

15. Befestigungssatz nach einem der vorhergehenden Ansprüche, dadurch gekennzeichnet, dass unterhalb des nach aussen überstehenden Dübelrandes (25) eine die Dübelwandstärke verringernde Ringnut (28) ausgebildet ist.

16. Befestigungssatz nach einem der vorhergehenden Ansprüche, dadurch gekennzeichnet, dass auf der Aussenseite des Dübelhalses unterhalb des Dübelrandes (25) mehrere nach aussen abstehende ringförmige Lamellen (29) ausgebildet sind.

17. Befestigungssatz nach einem der vorhergehenden Ansprüche, dadurch gekennzeichnet, dass die Schraube zwei im Abstand der in der Spreizzone bzw. im oberen Halsbereich am Dübel ausgebildeten Querrippen (10; 19, 21) am Schaft ausgebildete unterschiedliche Gewindeabschnitte (31, 32) aufweist.

18. Befestigungssatz nach Anspruch 17, dadurch gekennzeichnet, dass der obere Gewindeabschnitt (31) ein sich in die oberen Rippen (19, 21) einschneidendes schlankes Gewindeprofil besitzt.

19. Befestigungssatz nach Anspruch 17 oder 18, dadurch gekennzeichnet, dass der untere Gewindeabschnitt (32) einen dünneren Aussendurchmesser als der obere Gewindeabschnitt (31) besitzt.

20. Befestigungssatz nach einem der Ansprüche 17 bis 19, dadurch gekennzeichnet, dass der untere Gewindeabschnitt (32) als Trapezgewinde ausgebildet ist, dessen äussere Trapezflächen (33) in Richtung zur Schraubenspitze hin konisch schräg ausgebildet sind (Fig.14).

21. Befestigungssatz nach einem der vorhergehenden Ansprüche, dadurch gekennzeichnet, dass der Kopf (36) der Schraube im Durchmesser grösser gewählt ist als der Aussendurchmesser des Dübelrandes (25).

22. Befestigungssatz nach einem der vorhergehenden Ansprüche, dadurch gekennzeichnet, dass die Befestigungsschraube aus Kunststoff besteht.

23. Befestigungssatz nach einem oder mehreren der vorhergehenden Ansprüche, bei dem die Längsbohrung des Spreizdübels sich über den Schlitzanfang hinaus axial in einen Konus fortsetzt, dadurch gekennzeichnet, dass die parallelen Quernuten (9) auch im Konusbereich (40) vorgesehen sind und mit ihren inneren Enden (41) in die Konusöffnung noppenartig vorspringen.

24. Befestigungssatz nach Anspruch 1, dadurch gekennzeichnet, dass auf jeder Spreizhälfte (6 bzw. 7) zu beiden Seiten der Dübelachse (8) seitlich offene, in Dübelachsrichtung gegeneinander versetzte Quernuten (9) mit dazwischen verbleibenden gegeneinander versetzten Querrippen (10) vorgesehen sind.

**Claims**

1. A fastener set comprising a plastic expansion dowel and a fastening screw, in which the expansion dowel is formed with a longitudinal bore for receiving the screw, said bore in the vicinity of the expansion zone of said dowel merging into a laterally open slot, characterised in that short, laterally open transverse grooves (9) extending transversely to the dowel axis (8) and in parallel to each other are formed on the slot-(5)-defining opposed inner surfaces (11) of the two expansion halves (6 and 7) of the expansion zone, said transverse grooves being mutually staggered in step-fashion according to the pitch (α) of the thread of the fastening screw (30) (developed view of Figs. 2 and 5).

2. The fastener set as claimed in claim 1, characterised in that the transverse grooves (9) have such a profile that the short transverse ribs (10) remaining therebetween with their respective main portion (15) substantially fill the space between the threads (13, 14) of the fastening screw right to the bottom of said threads.

3. The fastener set as claimed in claim 1 or claim 2, characterised in that at least one additional longitudinal groove (12) intersecting said transverse grooves (9) is formed on the opposed inner surfaces (11) of the expansion halves (6, 7).

4. The fastener set as claimed in claim 3, characterised in that the depth of said longitudinal groove (12) is greater than that of the transverse grooves (9).

5. The fastener set as claimed in any one of the preceding claims, characterised in that the slot (5) of the dowel as viewed in cross-section has trapezoidal shape which is undercut towards both sides (Fig. 10).

6. The fastener set as claimed in any one of the preceding claims, characterised in that the slot (5) between said expansion halves (6, 7) is bridged at the edges thereof in the upper portion by at least one breaking web (23).

7. The fastener set as claimed in any one or several of the preceding claims and configured for push-through assembly, characterised in that in the vicinity of the dowel neck at the level of the member (16) to be fastened the inner surface of the dowel bore is provided with a rib (19, 21, 24) the pitch and profile of which are matched with the threads (31) of the fastening screw.

8. The fastener set as claimed in claim 7, characterised in that the height of the rib (19, 21, 10) is less than that of the transverse ribs (10) remaining between the transverse grooves (9) in the lower portion of the dowel.

9. The fastener set as claimed in claim 7 or claim 8, characterised in that plural ribs (19) are provided in side-by-side parallel relationship.

10. The fastener set as claimed in any one of the claims 7 to 9, characterised in that the ribs (21) are formed on three longitudinal ribs (20) distributed across the inside of the dowel bore (Figs. 4 to 6).

11. The fastener set as claimed in any one of the preceding claims 7 to 10, characterised in that within the dowel wall in the vicinity of the level of the member (16) to be fastened and thus also in the vicinity of the additional ribs (19, 21) at least two further slots (22) are formed.

12. The fastener set as claimed in any one of the claims 7 to 11, characterised in that on the inside of the dowel bore additional, inwardly projecting annular flanges (24) are provided as a protection against pocketing.

13. The fastener set as claimed in any one of the preceding claims, characterised in that the laterally projecting upper dowel edge (25) is relatively narrow and a reinforcing flange (26) is provided which projects inwardly into the dowel bore.

14. The fastener set as claimed in claim 13, characterised in that between the dowel edge (25) and the inwardly projecting reinforcing flange (26) there is provided a continuous groove (27).

15. The fastener set as claimed in any one of the preceding claims, characterised in that beneath the outwardly extending dowel edge (25) there is formed an annular groove (28) for reducing the dowel wall thickness.

16. The fastener set as claimed in any one of the preceding claims, characterised in that on the outer side of the dowel neck beneath the dowel edge (25) there are formed several outwardly protruding annular fins (29).

17. The fastener set as claimed in any one of the preceding claims, characterised in that the screw is provided with two different thread portions (31, 32) formed on the shaft with the spacing of the transverse ribs (10; 19, 21) which are respectively formed in the expansion zone and in the upper neck portion of the dowel.

18. The fastener set as claimed in claim 17, characterised in that the upper thread portion (31) has a slender thread profile which cuts into the upper ribs (19, 21).

19. The fastener set as claimed in claim 17 or claim 18, characterised in that the outer diameter of the lower thread portion (32) is thinner than the upper thread portion (31).

20. The fastener set as claimed in any one of the claims 17 to 19, characterised in that the lower thread portion (32) is configured as a buttress thread the outer buttress faces (33) of which taper obliquely towards the screw tip (Fig. 14).

21. The fastener set as claimed in any one of the preceding claims, characterised in that the diameter of the screw head (36) is selected to be larger than the outer diameter of the dowel edge (25).

22. The fastener set as claimed in any one of the preceding claims, characterised in that the fastening screw is made from plastic material.

23. The fastener set as claimed in any one or several of the preceding claims, in which the longitudinal bore of the expansion dowel extends axially beyond the start of the slot to form a cone, characterised in that the parallel transverse grooves (9) are also provided in the cone area (40) and have their inner ends (41) projecting nap-fashion into the cone opening.

24. The fastener set as claimed in claim 1, characterised in that on each expansion half (6 and 7, respectively) on either side of the dowel axis (8) there are provided laterally open transverse grooves (9) mutually offset in the direction of the dowel axis with mutually offset transverse ribs (10) remaining therebetween.

**Revendications**

1. Jeu de fixation composé d'une cheville à écartement en matière plastique et d'une vis de fixation dans lequel la cheville à écartement possède un alésage longitudinal recevant la vis, qui possède une fente ouverte latéralement dans sa zone ouvrante, caractérisé en ce que sur les surfaces intérieures (11) opposées, des deux demi-parties ouvrantes (6 et 7), de la zone ouvrante et formant la fente (5), sont formées des rainures transversales (9), ouvertes latéralement, transversalement à l'axe (8) de la cheville et se développant parallèlement entre-elles, qui sont décalées entre-elles en escalier (déroulement selon les figures 2 et 5), en fonction de la pente (α) du filetage de la vis de fixation (30).

2. Jeu de fixation selon la revendication 1, caractérisé en ce que les gorges transversales (9) présentent un profil tel que les courtes nervures transversales (10) qui demeurent entre-elles, remplissent essentiellement à chaque fois, avec leur partie principale (15), l'espace entre pas de vis (13, 14) de la vis de fixation, jusqu'au fond du filetage.

3. Jeu de fixation selon la revendication 1 ou 2, caractérisé en ce qu'il est formé au moins une rainure longitudinale (12) supplémentaire sur les surfaces internes (11) opposées des demi-parties ouvrantes (6, 7) et croisant les rainures transversales (9).

4. Jeu de fixation selon la revendication 3, caractérisé en ce que la profondeur de cette rainure longitudinale (12) est plus forte que celle des rainures transversales (9).

5. Jeu de fixation selon l'une des revendications précédentes, caractérisé en ce que la fente (5) de la cheville possède une section de forme trapézoïdale en dépouille des deux côtés (figure 10).

6. Jeu de fixation selon l'une des revendications précédentes, caractérisé en ce que la fente (5), située entre les deux demi-parties ouvrantes (6, 7) est pontée à ses bords, dans la zone supérieure par au moins une nervure (23) destinée à la rupture.

7. Jeu de fixation selon une ou plusieurs des revendications précédentes, formé pour le montage enfiché traversant, caractérisé en ce que dans la zone du col de cheville, à la hauteur de l'élément de construction (16) à fixer, il est prévu, sur la surface intérieure de l'alésage de cheville, au moins une nervure (19, 21, 24) dont la pente et le profil sont adaptés au filetage de la vis de fixation (31).

8. Jeu de fixation selon la revendication 7, caractérisé en ce que la nervure (19, 21, 10) possède une hauteur plus limitée que ne possèdent les nervures transversales (10) restant entre les rainures transversales (9), dans la zone inférieure de cheville.

9. Jeu de fixation selon la revendication 7 ou 8, caractérisé en ce que plusieurs nervures (19) sont prévues parallèlement, les unes à côté des autres.

10. Jeu de fixation selon l'une des revendications 7 à 9, caractérisé en ce que les nervures (21) sont formées sur trois nervures longitudinales (20) réparties sur la face interne de l'alésage de la cheville (figures 4 à 6).

11. Jeu de fixation selon l'une des revendications précédentes 7 à 10, caractérisé en ce qu'au moins deux autres fentes (22) sont formées dans la paroi de cheville, au voisinage de la hauteur de la pièce de construction à fixer (16) et ainsi également dans la zone des nervures supplémentaires (19, 21).

12. Jeu de fixation selon l'une des revendications 7 à 11, caractérisé en ce que des brides annulaires (24) supplémentaires, émergeant vers l'intérieur sont prévues comme sécurité d'enfoncement, sur la surface intérieure de l'alésage de cheville.

13. Jeu de fixation selon l'une des revendications précédentes, caractérisé en ce que le bord supérieur de cheville (25) émergeant latéralement, est de forme relativement étroite et en ce qu'il est prévu une bride de renforcement (26), émergeant vers l'intérieur dans l'alésage de cheville.

14. Jeu de fixation selon la revendication 13, caractérisé en ce qu'il est prévu une gorge périphérique (27), située entre le bord de la cheville (25) et la bride de renforcement (26) émergeant vers l'intérieur.

15. Jeu de fixation selon l'une des revendications précédentes, caractérisé en ce qu'en-dessous du bord de la cheville (25), émergeant vers l'extérieur, il est prévu une gorge annulaire (28) limitant l'épaisseur de paroi de cheville.

16. Jeu de fixation selon l'une des revendications précédentes, caractérisé en ce que plusieurs lamelles (29) de forme annulaire, émergeant vers l'extérieur, sont formées sur la face extérieure du cou de la cheville, au-dessous du bord de cheville (25).

17. Jeu de fixation selon l'une des revendications précédentes, caractérisé en ce que la vis possède deux sections différentes de filetage (21, 32), formées sur la tige, à distances des nervures transversales (10, 19, 21) formées dans la zone ouvrante, respectivement dans la zone supérieure de la cheville.

18. Jeu de fixation selon la revendication 17, caractérisé en ce que la section supérieure de filetage (31) possède un profil élancé, découpé dans les nervures supérieures (19, 21).

19. Jeu de fixation selon la revendication 17 ou 18, caractérisé en ce que la section inférieure de filetage (32) possède un diamètre extérieur plus petit que celui de la section de filetage supérieure (31).

20. Jeu de fixation selon l'une des revendications 17 à 19, caractérisé en ce que la section de filetage inférieure (32) est formée en un filet trapézoïdal, dont les surfaces extérieures (33) trapézoïdales sont formées de manière inclinée coniquement en direction de la pointe de vis (figure 14).

21. Jeu de fixation selon l'une des revendications précédentes, caractérisé en ce que la tête (36) de la vis est choisie d'un diamètre plus grand que le diamètre extérieur du bord de cheville (25).

22. Jeu de fixation selon l'une des revendications précédentes, caractérisé en ce que la vis de fixation est composée en matière plastique.

23. Jeu de fixation selon une ou plusieurs des revendications précédentes, dans laquelle le perçage longitudinal de la cheville à écartement se prolonge axialement au délà du début de la fente, en un cône, caractérisé en ce que les gorges transversales parallèles (9) sont également prévues dans la zone conique (40) et émergent dans l'ouverture conique, sous forme de boutons, avec leurs extrémités internes (41).

24. Jeu de fixation selon la revendication 1, caractérisé en ce que des rainures transversales (9) décalées les unes par rapport aux autres dans l'axe de la cheville, avec des nervures transversales (10) restantes, sont prévues sur chaque demi-parties ouvrante (6 respectivement 7), ouvrant latéralement de chaque côté de l'axe (8) de la cheville.

Fig 3

Fig 2

Fig 1

Fig 6

Fig 5

Fig 4

Fig 7

Fig 9

Fig 8

Fig 10

Fig 11

Fig 12

Fig 13

Fig 14

Fig 15

Fig 16

0 171 745